# EUROPEAN PATENT APPLICATION

(11) **EP 2 148 551 A1**
(43) Date of publication of application: **27.01.2010**
(21) Application number: 08385001.6
(22) Date of filing: 21.07.2008
(51) Int. Cl.: H05B 6/10, C21D 1/10, H05B 6/40

(54) **Inductive heating apparatus comprising a resonant circuit with simultaneous dual frequency current output and a single inverter circuit with silicon carbide**

(71) Applicant: GH Electrotermia, S.A., 46184 San Antonio de Benageber (ES)
(72) Inventor: Dede Garcia-Santamaria, Enrique J., 46100 Burjasot (ES); Esteve Gomez, Vicente, 46100 Burjasot (ES); Jordan Martinez, Jose, 46100 Burjasot (ES); Cases Sanchis, Cesar, 46184 San Antonio de Benageber (Valencia) (ES); Magraner Caceres, Jose Miguel, 46184 San Antonio de Benageber (Valencia) (ES)

(57) **Abstract**

An induction heating apparatus comprises a rectifier circuit (1) at its input, connected to the electric mains (2), an intermediate energy storage device, a single inverter circuit (3), a single resonant output circuit (4), a single heating inductor (5) and a block for auxiliary supply, regulation, supervision, display, cooling and communication (6). The single resonant output circuit (4) with four reactive components is able to generate a resulting current produced by simultaneously superimposing two current components with different frequencies. The power of each of the two different frequency components present at the output of the single resonant circuit (4) is regulated independently. The resulting current feeds the single heating inductor (5), generating a magnetic field allowing for special induction heating/hardening of complex surface parts such as gearwheels or sprockets. Some inverter semiconductors are of silicon carbide technology (SIC) devices.

## Description

### OBJECT OF THE INVENTION

This invention, as stated in the heading of this descriptive report, refers to a converter with simultaneous dual frequency output for induction heating whose essential purpose is to generate a current produced by superimposing two currents of different frequencies, so that this current can feed a single coil, generating a magnetic field allowing special induction heating processes, and with independent power regulation for each output frequency. The proposed converter can be useful for induction heating of workpieces with complex surfaces such as gearwheels or sprockets.

To this end, the invention provides a converter connected to the electrical mains containing a single inverter whose output is connected to a resonant circuit with four reactive components able to generate the aforementioned current produced by simultaneously superimposing two currents at different frequencies. The solution put forward by the invention ensures a considerable reduction in the costs of the equipment by using a single inverter circuit, and also improvements of the production times, as no movement or additional transport during the heat treatment processing is required. The technical field to which the invention belongs is that of induction heating and its applications are, amongst others, industrial inductive hardening of workpieces with complex surfaces such as gearwheels, sprockets and other items with complex surfaces used in the automobile industry.

### BACKGROUND TO THE INVENTION

Heat treatment for hardening metal workpieces with non-uniform cylindrical shape requires multi-frequency induction heating processes in order to ensure uniform hardening depth in the surface of the corresponding piece. Conventional induction hardening of uneven cylindrical surface parts is done by means of two sequential heating processes. High frequency currents are used to heat up the surfaces of the part closest to the heating inductor. In a separate heating process medium frequency current is used to heat up the almost cylindrical surface of the part. In the event of the part to be hardened being a gearwheel or a sprocket, the high frequency current is used to provide proper treatment for the tip and the flanges of the teeth and the medium frequency hardens the surface of the space between the teeth. With this approach a uniform treatment is ensured with the condition that the total cycle time is sufficiently short to prevent any excessive diffusion of the heat generated during the heating processes. This traditional process involves the use of two complete sets of converters generating the high and medium frequency currents, two output resonant circuits, two heating coils and an additional transport system.

One improvement on this technique can be achieved by installing a switching system which enables successively and repeatedly connecting the components needed to run the system at the frequency required in each case. This solution is described in the patent entitled "Power source device" by Y. Horiuchi (EP0295099). Another patent entitled "Cyclical, multiple frequency high-frequency induction heating apparatus" by Sawa Kunihico (US4755668) describes another similar invention in which the switching of the circuit components is not included.

The treatment obtained by means of the cyclic processes described above can be optimised if a single process could be performed in which should be possible to simultaneously generate the high and medium frequency currents feeding a single inductor. This solution provides major reductions in the total cycle time for hardening the part. Different solutions for this have been described in previous patents such as: "Inductor type furnace" by E. Northrup (US1852215), "Method and device for surface hardening of rotation symmetrical parts through inductive heating by means of at least two different frequencies" by L. Markegrad and W. Schwenk (EP0525207) and "Inductive heating device of workpieces" by W. Schwenk, A. Häussler and A. Helliger (EP1363474) in which the output current is obtained by means of two complete separate converters, one of these running at high frequency and the other at medium frequency, connected to a single heating inductor through appropriately designed resonant circuits in order to enable parallel connection of the output of both converters.

These state of the art solutions are considerably different from the one presented in this invention mainly because they use two complete converters with two direct voltage (DC) power supplies, because they do not use silicon carbide technology (SIC) and because they involve disadvantages as regards the high cost and complexity of the equipment or excessive production time.

### DESCRIPTION OF THE INVENTION

To attain these objectives and rule out the disadvantages stated above, the invention consists of a converter with simultaneous dual frequency output for induction heating, by means of which hardening treatments for complex cylindrical profiles can be performed.

One innovation involved in this invention is that its converter has a single inverter circuit and a single resonant circuit made up of four reactive components which contains a single heating inductor whose current is the result of superimposing a further two currents of different frequencies, so as to be able to use this current to supply a single coil generating a magnetic field allowing special induction heating processes to be performed.

According to the preferential embodiment of the invention, the proposed converter is structured as a single electronic apparatus whose functional blocks consist of a rectifier circuit for the electric mains rectification with an intermediate energy-storing device which connects to the single inverter circuit, which output is connected to a four reactive element resonant circuit provided including the heating inductor. The apparatus also includes a block for auxiliary power supply, regulation, supervision, display, cooling and communication.

In one embodiment of the invention, the proposed converter has a non-controlled rectifier bridge input circuit with a high value capacitor connected to its output, and a single inverter circuit with a full or half-bridge structure containing four or two unidirectional in voltage and bidirectional in current switches respectively. Each of these switches is formed by series connection of a direct low voltage diode and a MOSFET technology transistor. Both components are connected in parallel with another inverted silicon carbide technology (SIC) diode. The use of this technology represents a great improvement in the efficiency and reliability of the inverter under the working conditions described in this invention.

According to this invention, the combination of the two frequencies present at the output of the inverter is obtained through the modulation of the pulse width of the high frequency output voltage or current of the inverter, this modulation being obtained from the output of a medium frequency signal generator.

The converter proposed in this invention, allows independent power regulation of each of its medium and high frequency outputs.

With the configuration that has been described, this invention fulfils all the advantages that can be provided by devices whose operation is based on what was stated in the background section of the invention, such as the controllability and repeatability of the process, the time reduction in the process cycle and the uniformity of the heat treatment obtained, obtaining the necessary current for feeding simultaneously a single heating coil with medium and high frequency. The invention also provides additional advantages such as reducing the complexity, the cost and the volume of the installation, all through having a single converter and a single output resonant circuit.

Hereafter, to facilitate better understanding of this descriptive report and forming an integral part of this, figures are adjoined in which the object of the invention is represented for illustration purposes without constituting any limitation thereto.

### SHORT DESCRIPTION OF THE FIGURES

**Figure 1****.**- Represents the functional block diagram of the proposed converter with simultaneous dual frequency output for induction heating made according to this invention.
**Figure 2**.- Represents a basic electronic diagram of the converter shown in previous figure 1 for an embodiment which contains a single voltage-fed inverter.
**Figure 3****.**- Represents the main waveforms at the output of the converter referred to the above figures.

### DESCRIPTION OF ONE OR SEVERAL EXAMPLES OF EMBODIMENT OF THE INVENTION

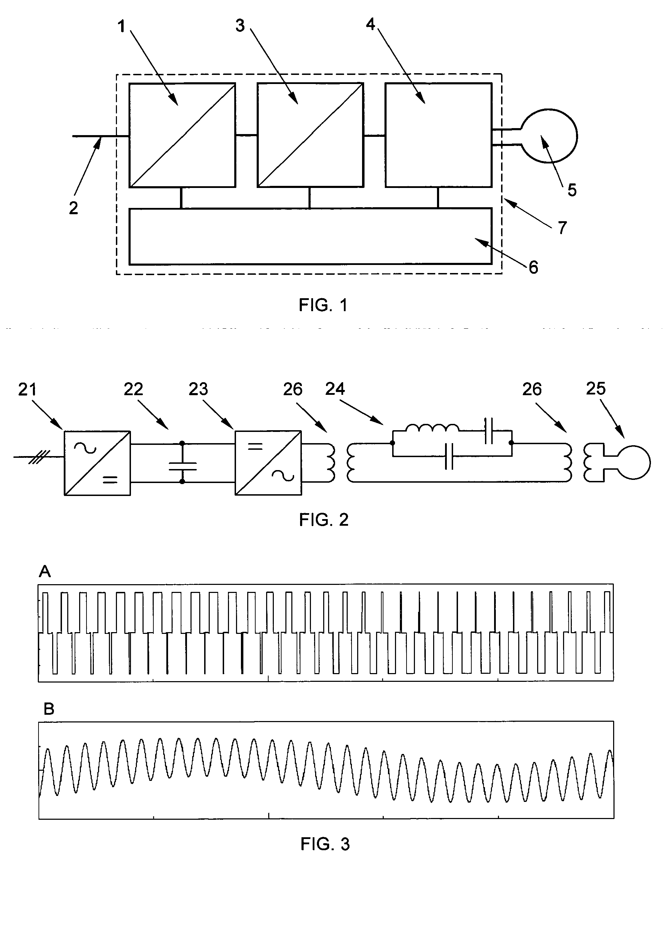

A description of an example of the invention, referring to the numbering used in the figures now is given. The proposed invention consists of an electronic system with four main blocks, 1, 3, 4 and 6, as shown in Figure 1. The system has a rectifier circuit 1 connected the electric mains voltage 2 which incorporates an intermediate device for energy storage, a single inverter circuit 3, a four reactive element resonant output circuit 4 including the heating inductor 5 and a block for auxiliary supply, regulation, supervision, display, cooling and communication 6 necessary for the system to run properly. Blocks 1, 3, 4 and 6 constituting an electronic apparatus 7 that can be made in a single cabinet or unit. The proposed system enables independent power regulation of each of the two different frequencies present at the output.

In the preferential embodiment of the invention there will be a cabinet in which all the circuits for the four functional blocks described above will be set up, apart from the cooling items required for the power circuits. Its dimensions mainly depend on the rated output power of the converter. In the external panels of the cabinet there are the connections with the electrical mains supply 2, and with the heating inductor 5, the connectors corresponding to the circuits for auxiliary supply, regulation, supervision and communication, and the input and output items for the coolant fluid which will be air or water depending on the nominal power of the system.

The electronic diagram of the embodiment is shown in Figure 2 and has an input circuit which is a non-controlled three-phase rectifier bridge 21 with a high-value capacitor connected to its output. The set of items mentioned above acts as a direct voltage source to supply the inverter circuit 23 with a full or half bridge structure with four or two voltage unidirectional and current bidirectional switches respectively. Each of these switches is formed by the series connection of a direct low voltage diode and a MOSFET technology transistor. Both components are connected in parallel with another inverted silicon carbide technology (SIC) diode. At the output of the inverter a resonant circuit with four reactive elements 24 is connected, including the heating inductor, with two appropriately chosen resonant frequencies which determine the medium and high frequencies that will simultaneously feed the heating inductor 25. Transformers 26 can be used as devices for adaptation of impedances and galvanic isolation. The combination of the two frequencies present at the output of the inverter is achieved by pulse width modulation of the inverter output voltage, represented in Figure 3A, whose frequency is close to the second series resonant frequency of the resonant circuit. This modulation is obtained from the output of a medium frequency signal generator tuned to the first series resonance frequency of the resonant circuit. The output current corresponds to the one shown in Figure 3B. The amplitude of the medium frequency component of the current in the heating inductor is regulated by adjusting the output amplitude of the medium frequency signal generator output. The regulation of the amplitude of the high frequency component of the current in the heating inductor is achieved by a suitable frequency shifting of the output current of the inverter in relation with the second series resonance frequency of the output circuit.

## Claims

1. **INVERTER WITH SIMULTANEOUS DUAL-FREQUENCY OUTPUT FOR INDUCTION HEATING WITH SILICON CARBIDE TECHNOLOGY (SIC),** by means of which heat-hardening treatments of workpieces with a complex cylindrical profile can be performed; the proposed invention has a single inverter circuit (3) and a single resonant circuit (4) with four reactive components including the heating inductor (5) whose current is the result of superimposing two currents of different frequencies so that said current can be used to supply the single heating coil generating a magnetic field enabling special induction heating processes to be performed.

2. **INVERTER WITH SIMULTANEOUS DUAL-FREQUENCY OUTPUT FOR INDUCTION HEATING WITH SILICON CARBIDE TECHNOLOGY (SIC),** according to claim 1, wherein this is structured in an electronic apparatus (7) whose functional blocks consist of a rectifier circuit (1) for the rectification of the electrical mains supply voltage (2) fitted with an intermediate energy storage device and which connects with the inverter circuit (3), which in turn connects with the resonant circuit (4) fitted with the heating inductor (5). The electronic apparatus (7) also including a block (6) for auxiliary supply, regulation, supervision, display, cooling and communication.

3. **INVERTER WITH SIMULTANEOUS DUAL-FREQUENCY OUTPUT FOR INDUCTION HEATING WITH SILICON CARBIDE TECHNOLOGY (SIC),** according to claim 1 or 2, wherein this contains a non-controlled rectifier bridge input circuit (21) with a high-value capacitor (22) connected at its output and an inverter circuit (23) with a full or half bridge structure consisting of four or two voltage unidirectional and current bidirectional switches respectively.

4. **INVERTER WITH SIMULTANEOUS DUAL-FREQUENCY OUTPUT FOR INDUCTION HEATING WITH SILICON CARBIDE TECHNOLOGY (SIC)** according to any one of the above claims, wherein each of the inverter switches is formed by a series connection of a direct low voltage diode and a MOSFET technology transistor. Both components are parallel- connected with another silicon carbide technology (SIC) inverted diode. By using this technology a great improvement in the efficiency and reliability of the inverter can be obtained.

5. **INVERTER WITH SIMULTANEOUS DUAL-FREQUENCY OUTPUT FOR INDUCTION HEATING WITH SILICON CARBIDE TECHNOLOGY (SIC)** according to any one of the above claims, wherein the combination of the two frequencies present in the inverter output is achieved by modulating the pulse width of the high frequency voltage at the inverter output, this modulation being obtained from the output of a medium frequency signal generator.

6. **INVERTER WITH SIMULTANEOUS DUAL-FREQUENCY OUTPUT FOR INDUCTION HEATING WITH SILICON CARBIDE TECHNOLOGY (SIC)** according to any one of the above claims, the medium frequency and the high frequency output power can be independently regulated.
